(19) Europäisches Patentamt
European Patent Office
Office européen des brevets

(11) **EP 3 588 849 A1**

(12) **EUROPÄISCHE PATENTANMELDUNG**

(43) Veröffentlichungstag:
**01.01.2020 Patentblatt 2020/01**

(21) Anmeldenummer: **18179011.4**

(22) Anmeldetag: **21.06.2018**

(51) Int Cl.:
*H04L 12/24* (2006.01)     *G05B 23/02* (2006.01)
*G06F 21/57* (2013.01)     *H04L 29/06* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Schall, Daniel**
**1220 Wien (AT)**

(54) **VERFAHREN ZUM QUANTIFIZIEREN DER ZUVERLÄSSIGKEIT EINER STEUERFUNKTION, DIE DURCH MEHRERE UNABHÄNGIGE FUNKTIONSEINHEITEN BEREITGESTELLT WIRD; SOWIE STEUEREINRICHTUNG**

(57) Die Erfindung betrifft ein Verfahren zum Bestimmen der Zuverlässigkeit einer Steuerfunktion für eine Gerätschaft (6), wobei mehrere voneinander unabhängige Funktionseinheiten (1, 2, 3) die Steuerfunktion gemeinsam bereitstellen und hierzu untereinander Schnittstellen (9) zum Austauschen von Steuersignalen aufweisen. Um die Aufgabe zu lösen, ein Bestimmen der Zuverlässigkeit der Steuerfunktion, welche durch voneinander unabhängige Funktionseinheiten bereitgestellt wird, bereitzustellen, sind folgende Schritte vorgesehen:

- Bestimmen (S2) einer Gefährdungsgröße (20) für eine zweite (2) der mehreren Funktionseinheiten (1, 2, 3), wobei die Gefährdungsgröße (20) eine Gefährdung der zweiten Funktionseinheit (2) durch eine Störung einer Empfangsschnittstelle (4) der zweiten Funktionseinheit (2) zwischen der zweiten Funktionseinheit (2) und einer ersten (1) der mehreren Funktionseinheiten (1, 2, 3) beschreibt, und
- Bestimmen (S3) der Zuverlässigkeit (24) der Steuerfunktion in Abhängigkeit von der Gefährdungsgröße (20).

FIG 1

**Beschreibung**

Die Erfindung betrifft ein Verfahren zum Bestimmen der Zuverlässigkeit einer Steuerfunktion für eine Gerätschaft. Ein zweiter Aspekt der Erfindung betrifft eine Steuereinrichtung mit Mitteln zum Durchführen eines solchen Verfahrens. Zur Erfindung gehören außerdem ein Computerprogramm mit Programmcodemitteln, ein Speichermedium sowie ein Datenstrom.

Gerätschaften, insbesondere industriell genutzte Produktionsgerätschaften im weitesten Sinne, und/oder deren Funktionseinheiten können miteinander vernetzt werden. Beispiele für Gerätschaften sind einzelne Produktionsanlagen, Produktionsmaschinen, Sensoren und Aktoren beziehungsweise Motoren. Bei den genannten Beispielen ergibt sich die Systematik, dass eine Produktionsmaschine jeweils zumindest einen Sensor und/oder zumindest einen Aktor beziehungsweise Motor aufweisen kann. Eine Produktionsanlage wiederum kann eine oder mehrere Produktionsmaschinen aufweisen. Es können beispielsweise Gerätschaften unterschiedlicher Hierachieebenen miteinander vernetzt werden. Wie im Beispiel genannt, können dabei auch kleinste Einheiten der Produktionsanlagen, beispielsweise die Sensoren oder Aktoren beziehungsweise Motoren, als eigenständiger Teil mit dem Netzwerk verbunden werden. Dieses Prinzip wird auch als "Internet of Things", zu Deutsch "Internet der Dinge", bezeichnet. Im industriellen Maßstab wird dies auch als Industrie 4.0 bezeichnet, welche durch die feingliedrige und eigenständige Vernetzung der einzelnen Gerätschaften ein besonders hohes Maß an Produktivität und Flexibilität ermöglicht. Dies ist zudem in den europäischen Patentanmeldungen mit den Siemens-Aktenzeichen 201803976 und 201724079 beschrieben.

Zur Steuerung und/oder Wartung derartiger Gerätschaften können wiederum unterschiedliche Funktionseinheiten vorgesehen sein. Dabei können Steuerfunktionen durch mehrere gleichartige und/oder verschiedenartige Funktionseinheiten im Zusammenspiel erbracht werden. Der Begriff Steuerfunktionen ist im vorliegenden Kontext breit zu verstehen und beinhaltet alle denkbaren Funktionen zum Steuern, Überwachen, Warten und/oder zum Sammeln von Daten. Mit anderen Worten kann durch ein Zusammenspiel der Funktionseinheiten die Steuerung, Überwachung, Wartung und/oder das Sammeln von Daten der Gerätschaften bereitgestellt sein. Selbstverständlich sind die Funktionseinheiten hierzu ebenfalls mit der Gerätschaft und untereinander vernetzt. Die Funktionseinheiten kommunizieren über Schnittstellen miteinander, um die Steuerfunktion bereitzustellen. Die Kommunikation über die Schnittstellen erfolgt durch den Austausch von Steuersignalen.

Die Funktionseinheiten können in eine Funktionsinstanz, insbesondere einen Mikroprozessoren, geladen werden. Eine Funktionseinheit kann somit ein Computerprogrammprodukt sein, welches die jeweilige Funktionsinstanz auf eine durch die Funktionseinheit vorgegebene Weise programmiert. Beispiele für Funktionsinstanzen sind Nutzergeräte (bspw. Endgeräte oder Rechner (Computer) von Nutzern), lokale Computer oder Server der Gerätschaft (bspw. ein Mikroprozessor oder eine Steuereinheit der Gerätschaft) und dezentrale Cloud-basierte beziehungsweise dezentrale Server (bspw. ein vom Ort der Gerätschaft entfernter Server). Die Funktionseinheiten können beispielsweise durch unterschiedliche oder dieselben Funktionsinstanzen bereitgestellt werden. Mit anderen Worten können die Funktionseinheiten durch eine einzelne Funktionsinstanz oder durch mehrere Funktionsinstanzen bereitgestellt werden. Beispielsweise können mehrere Funktionsinstanzen durch jeweils eine oder mehrere jeweilige Funktionseinheiten programmiert werden. Die Funktionseinheiten zum Bereitstellen der Steuerfunktion können somit über mehrere Funktionsinstanzen verteilt sein.

Um die Funktionsinstanz beziehungsweise die Funktionsinstanzen mit den zur Steuerung, Überwachung und/oder Wartung der Gerätschaft im Einzelfall notwendigen Funktionseinheiten auszustatten, kann eine Programmcodedatenbank vorgesehen sein. Eine solche Programmcodedatenbank kann beispielsweise nach Art eines digitalen Softwaremarktplatzes, auch mit dem englischen Fachbegriff Appstore bezeichnet, bereitgestellt sein. Die notwendigen Funktionseinheiten können aus der Programmcodedatenbank, insbesondere nach Art eines Softwaremarktplatzes, auf der Funktionsinstanz beziehungsweise den Funktionsinstanzen installiert werden. Um einen reibungslosen Produktionsablauf zu gewährleisten, ist es nötig, dass stets ein reibungsloses Zusammenspiel zwischen den einzelnen Funktionseinheiten möglich ist. Aufgrund der Modularität des Systems an Funktionseinheiten muss dieses Zusammenspiel auch für unterschiedliche und wechselnde Konfigurationen an Funktionseinheiten stets gewährleistet sein.

Es ist Aufgabe der vorliegenden Erfindung, eine Quantifizierung der Zuverlässigkeit einer Steuerfunktion, welche durch voneinander unabhängige Funktionseinheiten bereitgestellt wird, bereitzustellen.

Diese Aufgabe wird erfindungsgemäß gelöst durch die Gegenstände der unabhängigen Patentansprüche. Vorteilhafte Ausführungsformen und zweckmäßige Weiterbildungen sind Gegenstand der Unteransprüche.

Ein erster Aspekt der Erfindung betrifft ein Verfahren zum Bestimmen der Zuverlässigkeit einer Steuerfunktion für eine Gerätschaft, wobei mehrere Funktionseinheiten die Steuerfunktion zum Steuern und/oder Überwachen der Gerätschaft gemeinsam bereitstellen und die mehreren Funktionseinheiten hierzu untereinander Schnittstellen zum Austauschen von Steuersignalen aufweisen. Dem Verfahren liegen die folgenden Schritte zugrunde:

-  Bestimmen einer Gefährdungsgröße für eine zweite der mehreren Funktionseinheiten, wobei die Gefährdungsgröße eine Gefährdung der zweiten Funktionseinheit durch eine Störung einer Empfangsschnittstelle der zweiten Funktionseinheit zwischen der zweiten Funktionseinheit und einer ersten der mehreren Funktionseinheiten beschreibt, und

- Bestimmen der Zuverlässigkeit der Steuerfunktion in Abhängigkeit von der Gefährdungsgröße.

Die Zuverlässigkeit der Steuerfunktion kann in Abhängigkeit von der Gefährdungsgröße nach einer vorbestimmten Vorschrift bestimmt werden. Im Rahmen dieser Anmeldung ist aus Gründen der Knappheit nur von einer Steuerfunktion zum Steuern und/oder Überwachen der Gerätschaft die Rede. Diese Formulierung schließt jedoch ausdrücklich auch mehrere Steuerfunktionen mit ein.

Die mehreren Funktionseinheiten können Teil desselben Softwaremarktplatzes sein. Die mehreren Funktionseinheiten können auf unterschiedlichen Funktionsinstanzen installiert sein. Beispielsweise wird jede der Funktionseinheiten auf einem jeweiligen Mikroprozessor ausgeführt oder steht in dem Softwaremarktplatz zur Ausführung auf einem jeweiligen Mikroprozessor bereit. Die mehrere Funktionseinheiten können unabhängig voneinander sein beziehungsweise jeweils abgeschlossen Einheiten sein. Die Kommunikation einer Funktionseinheit mit einer anderen ist aus Sicht der jeweiligen Funktionseinheit somit eine externe Kommunikation.

Abhängig von der Gefährdung der zweiten Funktionseinheit durch eine Störung einer Empfangsschnittstelle erfolgt das Bestimmen der Gefährdungsgröße. Die Empfangsschnittstelle kann eine Empfangsschnittstelle der zweiten Funktionseinheit sein. Dementsprechend kann die Empfangsschnittstelle bezogen auf die erste Funktionseinheit eine Sendeschnittstelle sein. Somit ist die zweite Funktionseinheit insbesondere dazu eingerichtet, über die Empfangsschnittstelle Steuersignale aus der ersten Funktionseinheit zu empfangen. Dabei kann die Gefährdungsgröße die Gefährdung angeben, welche sich für den Betrieb der zweiten Funktionseinheit durch den Ausfall von Steuersignalen, die für den Betrieb der zweiten Funktionseinheit nötig sind, ergibt. Die Gefährdungsgröße kann davon abhängen, wie groß die Gefährdung des Betriebs der zweiten Funktionseinheit durch eine Störung einer der Empfangsschnittstellen ist. Die Störung einer Empfangsschnittstelle kann beispielsweise durch eine Störung oder einen Ausfall einer Signalverbindung zwischen der ersten Funktionseinheit und der zweiten Funktionseinheit, durch einen Ausfall der jeweiligen ersten Funktionseinheit oder durch eine Funktionsstörung der jeweiligen ersten Funktionseinheit hervorgerufen werden. Allgemein bedeutet "Störung der Empfangsschnittstelle", dass ein durch die zweite Funktionseinheit benötigtes Steuersignal über die Empfangsschnittstelle nicht oder nicht zuverlässig empfangen werden kann. Die Ursache hierfür muss nicht zwangsläufig an der Empfangsschnittstelle vorliegen.

Die Gefährdungsgröße kann beispielsweise abhängig von einer Anzahl und/oder oder einer Relevanz der ersten Funktionseinheiten für den Betrieb der zweiten Funktionseinheit bestimmt werden. Die Relevanz kann hier angeben, wie wichtig die jeweilige erste Funktionseinheit für eine korrekte Funktion der zweiten Funktionseinheit ist. Dabei ist die Gefährdungsgröße beispielsweise davon abhängig, wie bedeutsam jeweilige der Steuersignale, die für den Betrieb der zweiten Funktionseinheit aus den ersten Funktionseinheiten empfangen werden, sind. Beispielsweise ist die Gefährdungsgröße umso größer, je größer die Bedeutung der über die jeweiligen Empfangsschnittstellen empfangenen Steuersignale ist. Alternativ oder zusätzlich kann die Gefährdungsgröße umso größer sein, je größer die Zahl an ersten Funktionseinheiten ist.

Bei dem Bestimmen der Zuverlässigkeit der Steuerfunktion kann vorgesehen sein, dass ein Maß für die Zuverlässigkeit aus der Gefährdungsgröße und optional aus weiteren Ausgangsgrößen gebildet wird. Hierbei kann die Zuverlässigkeit beziehungsweise das Maß für die Zuverlässigkeit mathematisch aus der Gefährdungsgröße und optional den weiteren Ausgangsgrößen errechnet werden. Zum Bestimmen der Zuverlässigkeit der Steuerfunktion kann eine vorbestimmte Vorschrift vorgegeben sein.

Zum Bestimmen der Zuverlässigkeit der Steuerfunktion kann die vorbestimmte Vorschrift umfassen, dass die Zuverlässigkeit umso geringer ist, je größer die Gefährdungsgröße ist. Beispielsweise kann ein Maß der Zuverlässigkeit indirekt proportional zu der Gefährdungsgröße sein. Selbstverständlich kann das Maß der Zuverlässigkeit jedoch noch von weiteren Größen abhängig sein.

In einem zusätzlichen, optionalen Schritt a) kann bestimmt werden, mit welchen ersten der mehreren Funktionseinheiten die zweite Funktionseinheit jeweils zumindest eine Empfangsschnittstelle zum Empfangen jeweiliger Steuersignale aus der jeweiligen ersten Funktionseinheiten aufweist. Dieser Schritt a) wird insbesondere vor den oben genannten Schritten durchgeführt. Mit anderen Worten kann in dem ersten Schritt a) geprüft werden, von wie vielen und/oder von welchen der mehreren Funktionseinheiten die zweite Funktionseinheit über eine jeweilige Empfangsschnittstelle Steuersignale empfangen kann. Diese Funktionseinheiten werden vorliegend als die ersten Funktionseinheiten bezeichnet. Es können alle diejenigen der Funktionseinheiten, welche dazu ausgebildet sind, Steuersignale an die zweite Funktionseinheit, genauer an deren jeweilige Empfangsschnittstellen, zu übermitteln, als die ersten Funktionseinheiten ermittelt werden. Es können somit diejenigen der mehreren Funktionseinheiten als erste Funktionseinheiten ermittelt werden, von welchen die zweite Funktionseinheit für ihren Betrieb jeweilige Steuersignale benötigt. Es ist möglich, dass eine Anzahl von null ersten Funktionseinheiten, eine Anzahl von zwei ersten Funktionseinheiten oder eine Anzahl von drei oder mehr ersten Funktionseinheiten ermittelt wird.

Gemäß einer Weiterbildung ist vorgesehen, dass die Gefährdungsgröße auf Basis jeweiliger Ausfallwahrscheinlichkeiten der jeweils zumindest einen Empfangsschnittstellen der zweiten Funktionseinheit mit jeder der ersten Funktionseinheiten bestimmt wird. Eine jeweilige Ausfallwahrscheinlichkeit für eine der ersten Funktionseinheiten kann angegeben, wie wahrscheinlich der Ausfall der jeweiligen ersten Funktionseinheit ist, wie wahrscheinlich eine Funktionsstörung der jeweiligen Funktionseinheit ist und/oder wie wahrscheinlich es ist, dass die Kommunikation über die Empfangsschnittstelle verzögert oder unterbrochen wird. Allgemein kann die Ausfallwahrscheinlichkeit angegeben, mit welcher Wahrscheinlichkeit der Empfang den jeweiligen Steuersignalen aus der jeweiligen ersten Funktionseinheit ausfallen wird. Dabei kann die Ausfallwahrscheinlichkeit auf Basis vergangener Erfahrungen, vergangener Ausfälle und/oder Schätzungen für zukünftige Ausfälle gebildet sein.

Gemäß einer Weiterbildung ist vorgesehen, dass ein Verwundbarkeitsmaß bestimmt wird, wobei das Verwundbarkeitsmaß angibt, wie widerstandsfähig die zweite Funktionseinheit gegenüber einem Ausfall einer Empfangsschnittstellen der zweiten Funktionseinheit mit einer der ersten Funktionseinheiten ist. Das Bestimmen der Zuverlässigkeit erfolgt dann zusätzlich in Abhängigkeit von dem Verwundbarkeitsmaß. Ein solches Verwundbarkeitsmaß wird auch mit dem englischen Fachbegriff "vulnerability" bezeichnet. Das Bestimmen des Verwundbarkeitsmaßes kann entsprechend einer weiteren vorbestimmten Vorschrift erfolgen. Durch das Verwundbarkeitsmaß kann berücksichtigt werden, dass die Funktion der zweiten Funktionseinheit auch im Falle eines Ausfalls einer Schnittstelle zu einer der ersten Funktionseinheiten aufrechterhalten werden kann. Dabei kann das Verwundbarkeitsmaß umso größer sein, je geringer die Wahrscheinlichkeit ist, dass die Funktion der zweiten Funktionseinheit in diesem Fall aufrechterhalten werden kann. Beispielsweise kann das Verwundbarkeitsmaß simuliert und/oder aus vorangegangenen Ausfällen von Empfangsschnittstellen bestimmt werden.

Insbesondere ist vorgesehen, dass das Verwundbarkeitsmaß umso kleiner ist, je mehr Personal zur Wartung der zweiten Funktionseinheit vorgesehen ist und/oder je kürzer ein Wartungsintervall der zweiten Funktionseinheit ist. Mit anderen Worten kann die weitere vorbestimmte Vorschrift umfassen, dass das Verwundbarkeitsmaß als umso kleiner bestimmt wird, je mehr Personal zur Wartung der zweiten Funktionseinheit zur Verfügung steht. Beispielweise kann das Verwundbarkeitsmaß indirekt proportional zur Personalstärke sein. Alternativ oder zusätzlich kann das Verwundbarkeitsmaß indirekt proportional zu einer Länge des Wartungsintervalls, also zum zeitlichen Abstand zwischen zwei planmäßigen Wartungen der zweiten Funktionseinheit, sein. Je mehr Personal zur Verfügung steht oder je kürzer das Wartungsintervall ist, desto zuverlässiger und schneller kann die zweite Funktionseinheit an neue Rahmenbedingungen, also beispielsweise den Ausfall einer Empfangsschnittstelle, angepasst werden. Dies wiederum erhöht die Zuverlässigkeit der Steuerfunktion.

Gemäß einer Weiterbildung ist vorgesehen, dass bestimmt wird, zu wie vielen dritten der mehreren Funktionseinheiten die zweite Funktionseinheit eine Sendeschnittstelle zum Übermitteln von Steuersignalen an die dritten Funktionseinheiten aufweist. Zusätzlich kann ein Abhängigkeitsmaß bestimmt wird, wobei das Abhängigkeitsmaß zumindest davon abhängt, wie viele dritte Funktionseinheiten vorhanden sind. Das Bestimmen der Zuverlässigkeit kann dann zusätzlich in Abhängigkeit von dem Abhängigkeitsmaß erfolgt. Mit anderen Worten kann bestimmt werden, an wie viele der mehrere Funktionseinheiten die zweite Funktionseinheit ausgebildet ist, Steuersignale zu übermitteln. Mit nochmals anderen Worten kann ermittelt werden, wie viele der mehreren Funktionseinheiten in ihrem Normalbetrieb Steuersignale von der zweiten Funktionseinheit empfangen. Dieser ermittelten beziehungsweise bestimmten Funktionseinheiten werden als die dritten Funktionseinheiten bezeichnet. Das Abhängigkeitsmaß kann somit angeben, wie stark die größeren der mehreren Funktionseinheiten von der zweiten Funktionseinheit abhängig sind. Mit anderen Worten kann das Abhängigkeitsmaß angeben, wie groß die Bedeutung der zweiten Funktionseinheit für die übrigen der Funktionseinheiten ist. Diejenigen Funktionseinheiten, für deren Betrieb die zweite Funktionseinheit von Bedeutung ist, sind dabei die dritten Funktionseinheiten. Umso größer die Bedeutung der zweiten Funktionseinheit für die übrigen der mehreren Funktionseinheiten ist, umso geringer kann die Zuverlässigkeit der Steuerfunktion quantifiziert werden. Dies ist darin begründet, dass der Ausfall dritter Funktionseinheiten umso wahrscheinlich ist, je größer das Abhängigkeitsmaß ist. Es ist möglich, dass eine Anzahl von null dritten Funktionseinheiten, eine Anzahl von zwei dritten Funktionseinheiten oder eine Anzahl von drei oder mehr dritten Funktionseinheiten ermittelt wird. Durch das Abhängigkeitsmaß können Abhängigkeiten zwischen den Funktionseinheiten noch besser zum Bestimmen der Zuverlässigkeit der Steuerfunktion herangezogen werden.

Dabei ist insbesondere vorgesehen, dass das Abhängigkeitsmaß umso größer ist, je mehr dritte Funktionseinheiten erkannt werden. Beispielsweise kann das Abhängigkeitsmaß proportional zur Anzahl an dritten Funktionseinheiten sein. Alternativ oder zusätzlich kann in das Abhängigkeitsmaß einfließen, wie groß die Bedeutung der zweiten Funktionseinheit für die dritten Funktionseinheiten jeweils ist. In diesem Fall kann das Abhängigkeitsmaß umso größer sein, umso größer die Bedeutung der zweiten Funktionseinheit für jeweilige dritte Funktionseinheiten ist. Die genannten Schritte zum Bestimmen des Abhängigkeitsmaßes bilden einfache und effektive Möglichkeiten, die Verpflichtungen zwischen den Funktionseinheiten zu bestimmen.

Gemäß einer Weiterbildung ist vorgesehen, dass eine Ähnlichkeitsprüfung durchgeführt wird, im Rahmen welcher ein Maß für die funktionelle Ähnlichkeit der zweiten Funktionseinheit mit weiteren Funktionseinheiten bestimmt wird. Das Bestimmen der Zuverlässigkeit kann dann zusätzlich in Abhängigkeit von einem Ergebnis der Ähnlichkeitsprüfung erfolgt. Im Rahmen der Ähnlichkeitsprüfung können unter den weiteren Funktionseinheiten eine oder mehrere Funktionseinheiten gesucht beziehungsweise bestimmt werden, welche in ihrer Funktion ähnlich zu der zweiten Funktionseinheit sind. Funktionell ähnlich beziehungsweise funktionelle Ähnlichkeit bedeutet hierbei insbesondere, dass eine Funktion der zweiten Funktionseinheit durch geringe Anpassungen, die ein vorbestimmtes Maß für einen Programmieraufwand nicht überschreiten, an einer funktionell ähnlichen Funktionseinheit bereitgestellt werden können. Insbesondere kann im Rahmen der Ähnlichkeitsprüfung eine Funktionseinheit unter den weiteren Funktionseinheiten bestimmt beziehungsweise gesucht werden, welche eine Funktion der zweiten Funktionseinheit auf gleichartige Art und Weise bereitstellen kann. Allgemein kann im Rahmen der Ähnlichkeitsprüfung ermittelt werden, ob die zweite Funktionseinheit durch eine der weiteren Funktionseinheiten ersetzt werden kann. Das Ergebnis kann dann zum Bestimmen der Zuverlässigkeit herangezogen werden.

Die Menge der weiteren Funktionseinheiten kann gleich zur Menge der mehreren Funktionseinheiten sein. Die Menge der weiteren Funktionseinheiten kann jedoch auch noch zusätzliche Funktionseinheiten, welche nicht Teil der mehreren Funktionseinheiten sind, umfassen.

Insbesondere ist vorgesehen, dass bei dem Bestimmen der Zuverlässigkeit das Maß für die Zuverlässigkeit als umso größer quantifiziert wird, je größer eine festgestellte Ähnlichkeit der zweiten Funktionseinheit mit einer der weiteren Funktionseinheiten ist. Mit anderen Worten kann die Zuverlässigkeit also umso größer quantifiziert werden, je ähnlicher sich die zweite Funktionseinheit und eine der weiteren Funktionseinheiten sind. Dies beruht darauf, dass in diesem Fall die zweite Funktionseinheit besonders einfach und zuverlässig durch die ähnliche der weiteren Funktionseinheiten ersetzt werden kann.

Gemäß einer Weiterbildung ist vorgesehen, dass die weiteren Funktionseinheiten sowie die zweite Funktionseinheit semantisch gruppiert werden und die Ähnlichkeitsprüfung nur mit den weiteren Funktionseinheiten derselben semantischen Gruppe durchgeführt wird. Die semantische Gruppierung kann Beispielsweise basierend auf einer Beschreibung eines oder mehrerer Stichworte und/oder einer Dokumentation der jeweiligen Funktionseinheiten durchgeführt werden. Funktionseinheiten, welche der zweiten Funktionseinheit ähnlich sind, sind mit besonders hoher Wahrscheinlichkeit in derselben semantischen Gruppe wie die zweite Funktionseinheit zu finden. Dem gegenüber ist es unwahrscheinlich, dass eine Funktionseinheit, welche nicht in derselben semantischen Gruppe wie die zweite Funktionseinheit ist, der zweiten Funktionseinheit ähnlich ist. Aus diesem Grund wird die Ähnlichkeitsprüfung nur zwischen der zweiten Funktionseinheit und denjenigen Funktionseinheiten, welche Teil derselben semantischen Gruppe sind, durchgeführt. Auf diese Weise kann ein Aufwand für die Ähnlichkeitsprüfung verringert werden.

Gemäß einer Weiterbildung ist vorgesehen, dass eine erste Anzahl an Schnittstellen, welche zwischen den Funktionseinheiten unterschiedlicher der semantischen Gruppen vorhanden sind, bestimmt wird. Zusätzlich wird eine zweite Anzahl an Schnittstellen bestimmt, welche zwischen den Funktionseinheiten der unterschiedlichen semantischen Gruppen und der zweiten Funktionseinheit vorhanden sind. Bei dem Bestimmen der Zuverlässigkeit wird das Maß für die Zuverlässigkeit abhängig davon bestimmt, wie groß die zweite Anzahl an Schnittstellen im Vergleich zu der ersten Anzahl an Schnittstellen ist. Insbesondere wird bei dem Bestimmen der Zuverlässigkeit das Maß für die Zuverlässigkeit als umso geringer bestimmt, je größer die zweite Anzahl an Schnittstellen im Vergleich zu der ersten Anzahl an Schnittstellen ist. Die zugrunde liegende Idee ist die, dass Funktionseinheiten unterschiedlicher semantischer Gruppen häufig nur im geringen Maß miteinander verknüpft sind. Das bedeutet, zwischen den Funktionseinheiten unterschiedlicher semantischer Gruppen gibt es häufig nur eine geringe Anzahl an Schnittstellen (erste Anzahl an Schnittstellen). Wenn sich die Schnittstellen hierbei besonders stark auf eine einzelne Funktionseinheit konzentrieren, so kann diese Funktionseinheit als Brücke zwischen den semantischen Gruppen aufgefasst werden. Fällt nun eine solche Brücke zwischen den zwei funktionalen Gruppen aus, so kann dies besonders weitreichende Folgen für die Bereitstellung der Steuerfunktion haben. Das Verhältnis zwischen erster Anzahl und zweiter Anzahl gibt somit an, wie stark sich die Schnittstellen zwischen den Funktionseinheiten der beiden semantischen Gruppen auf die zweite Funktionseinheit konzentrieren. Auf diese Weise kann der Grad, zu welchem die zweite Funktionseinheit als Brücke zu verstehen ist, ermittelt werden. Dies wiederum kann zum Bestimmen der Zuverlässigkeit berücksichtigt werden. Umso größer die zweite Anzahl an Schnittstellen im Vergleich zu der ersten Anzahl an Schnittstellen ist, desto eher ist die zweite Funktionseinheit als Brücke aufzufassen. Somit kann das Bestimmen der Zuverlässigkeit weiter verbessert werden.

Gemäß einer Weiterbildung ist vorgesehen, dass die genannten Schritte aus Sicht der zweiten Funktionseinheit für jede der mehreren Funktionseinheiten durchgeführt werden. Mit anderen Worten wird jede der mehreren Funktionseinheiten als die zweite Funktionseinheit aufgefasst und die in Bezug auf die zweite Funktionseinheit genannten Schritte durchgeführt. Für die zweite Funktionseinheit werden im Rahmen unterschiedlicher Merkmale des vorliegenden Verfahrens Empfangsschnittstellen der zweiten Funktionseinheit (im Rahmen der Gefährdungsgröße) die zweite Funktionseinheit selbst (im Rahmen des Verwundbarkeitsmaßes) und Ausgangsschnittstellen der zweiten Funktionseinheit (im Rahmen des Abhängigkeitsmaßes) betrachtet. Zusätzlich wird das Ähnlichkeitsmaß betrachtet. All diese Schritte können für jede der mehreren Funktionseinheiten durchgeführt werden. Auf diese Weise ergibt sich ein umfassenderes Bild der Zuverlässigkeit der Steuerfunktion.

Gemäß einer Weiterbildung ist vorgesehen, dass aus der Zuverlässigkeit, die für jede der mehreren Funktionseinheiten bestimmt wird, eine Gesamtzuverlässigkeit der Steuerfunktion gebildet wird. mit anderen Worten wird für jede der mehreren Funktionseinheiten eine Zuverlässigkeit bestimmt, in dem die für die zweite Funktionseinheit vorgesehenen Schritte für jede der Funktionseinheiten durchgeführt werden. Diese jeweiligen Zuverlässigkeiten können dann zu der Gesamtzuverlässigkeit zusammengefasst werden. Beispielsweise kann dies durch Addition oder Multiplikation der jeweiligen Zuverlässigkeiten erfolgen.

Die Zuverlässigkeit kann, beispielsweise entsprechend der vorbestimmten Vorschrift, durch mathematisches Verknüpfen der Gefährdungsgröße, des Abhängigkeitsmaßes und des Verwundbarkeitsmaßes bestimmt werden. Die mathematische Verknüpfung kann beispielsweise durch Addition, Multiplikation oder einen anderen mathematischen Operator gegeben sein. Das Maß für die Zuverlässigkeit, welches vorliegend bestimmt wird, setzt sich somit vorteilhafter Weise aus der Gefährdungsgröße, dem Verwundbarkeitsmaß und dem Abhängigkeitsmaß sowie optional dem Ähnlichkeitsmaß zusammen. Zusätzlich kann berücksichtigt werden, wie stark die zweite Funktionseinheit als Brücke aufzufassen ist.

Die mehreren Funktionseinheiten können zum Bereitstellen der Steuerfunktion jeweils als Datenquelle, Steuereinheit, Wartungseinheit und/oder Überwachungseinheit genutzt werden. Mit anderen Worten können die mehreren Funktionseinheiten jeweils zum Bereitstellen von Daten, Ausgeben von Steuerbefehlen, Sammeln von Wartungsdaten beziehungsweise Betriebsdaten und/oder zum Überwachen der Gerätschaft vorgesehen sein beziehungsweise ausgebildet sein. Allgemein können die Funktionseinheiten jeweils zum Bereitstellen beliebiger Funktionen ausgebildet sein beziehungsweise genutzt werden.

Ein zweiter Aspekt der Erfindung betrifft eine Steuereinrichtung zum Bestimmen der Zuverlässigkeit einer Steuerfunktion für eine Gerätschaft, wobei die Steuereinrichtung eingerichtet ist, ein erfindungsgemäßes Verfahren zum Bestimmen der Zuverlässigkeit einer Steuerfunktion durchzuführen. Die Steuereinrichtung kann zur Durchführung von zuvor oder nachfolgend beschriebenen Verfahrensschritten in allen möglichen Kombinationen ausgebildet sein. Die Steuereinrichtung kann Mittel zum Bestimmen der Zuverlässigkeit einer Steuerfunktion aufweisen. Dabei können die Mittel der Steuereinrichtung zur Durchführung von zuvor oder nachfolgend beschriebenen Verfahrensschritten in allen möglichen Kombinationen ausgebildet sein. Bei der Steuereinrichtung kann es sich um einen zentralen Server, eine Cloud, ein clientseitiges Rechengerät, insbesondere einen Personalcomputer oder einen tragbarer Computer, ein Tabletcomputer oder ein Smartphone handeln. Alternativ kann die Steuereinrichtung durch ein Netzwerk aus mehreren unterschiedlichen oder gleichartigen Geräten, insbesondere der genannten Geräte, gebildet sein. Die oben in Bezug auf das erfindungsgemäße Verfahren genannten Merkmale und Weiterbildungen sowie deren Vorteile sind auch auf die erfindungsgemäße Steuereinrichtung übertragbar.

Zur Erfindung gehört außerdem ein Computerprogramm, welches direkt in einen Speicher einer erfindungsgemäßen Steuereinrichtung ladbar ist, mit Programmcodemitteln, um die Schritte des erfindungsgemäßen Verfahrens auszuführen, wenn das Programm in der Steuereinrichtung ausgeführt wird. Das erfindungsgemäße Computerprogramm implementiert das erfindungsgemäße Verfahren auf einer erfindungsgemäßen Steuereinrichtung, wenn es auf der Steuereinrichtung ausgeführt wird. Dementsprechend gehört zur Erfindung außerdem ein Speichermedium mit darauf gespeicherten elektronisch lesbaren Steuerinformationen, welche zumindest das genannte Computerprogramm umfassen und derart ausgestaltet sind, dass sie bei Verwendung des Speichermediums in einer erfindungsgemäßen Steuereinrichtung das erfindungsgemäße Verfahren durchführen. Das Speichermedium kann beispielsweise zum digitalen oder analogen Speichern von Daten eingerichtet sein. Das Speichermedium kann, einfach oder mehrfach beschreibbar, flüchtig (volatil) oder nicht flüchtig sein.

Ein weiterer Aspekt der Erfindung betrifft einen Datenstrom an Daten umfassend ein Maß für eine Zuverlässigkeit einer Steuerfunktion, wobei der Datenstrom zumindest teilweise mittels eines erfindungsgemäßen Verfahrens gewonnen wurde.

Zur Erfindung gehört außerdem ein Verfahren zum Speichern von Daten, welche zumindest teilweise mittels eines erfindungsgemäßen Verfahrens gewonnen wurden, auf ein weiteres Speichermedium. Bei diesen Daten kann es sich um den obengenannten Datenstrom handeln. Das weitere Speichermedium kann beispielsweise zum digitalen oder analogen Speichern von Daten eingerichtet sein. Das weitere Speichermedium kann, einfach oder mehrfach beschreibbar, flüchtig (volatil) oder nicht flüchtig sein.

Die vorliegende Erfindung wird nun anhand der beigefügten Zeichnungen näher erläutert, in denen zeigen:

FIG 1    in einem Blockdiagramm mehrere Funktionseinheiten, welche untereinander Schnittstellen aufweisen;

FIG 2    in einem Blockdiagramm mehrere Funktionseinheiten, welche sich auf unterschiedliche semantische Gruppen aufteilen;

FIG 3    in einem Blockdiagramm eine mögliche Verarbeitungsstruktur zum Bestimmen der Zuverlässigkeit der Steuerfunktion; und

FIG 4    ein beispielhaftes Ablaufdiagramm des Verfahrens.

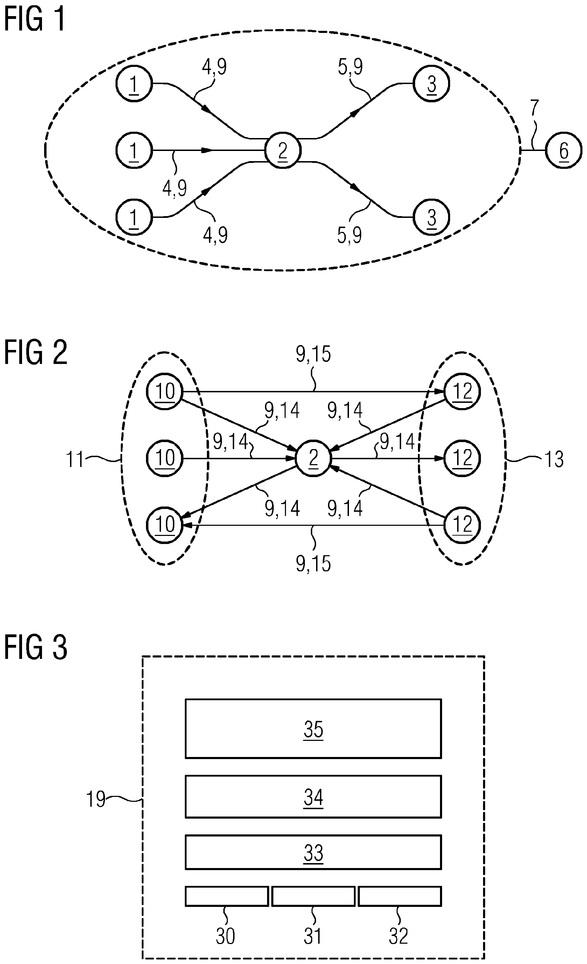

Die FIG 1 zeigt mehrere Funktionseinheiten 1, 2, 3, welche dazu ausgebildet sind, gemeinsam eine Steuerfunktion für eine Gerätschaft 6 bereitzustellen. Die Funktionseinheiten 1, 2, 3 sind hierzu untereinander vernetzt. Hierzu sind Schnittstellen 9 vorhanden, über welche die Funktionseinheiten 1, 2, 3 Steuersignale austauschen können. Bei den Schnittstellen 9 kann es sich um analoge und/oder digitale Schnittstellen handeln. Somit können analoge und/oder digitale Steuersignale über die Schnittstellen 9 übermittelt werden. Die Funktionseinheiten 1, 2, 3 können in eine Funktionsinstanz, insbesondere einen Mikroprozessoren, geladen werden. Eine Funktionseinheit 1, 2, 3 kann somit ein Computerprogrammprodukt sein, welches die Funktionsinstanz auf eine durch die Funktionseinheiten 1, 2, 3 vorgegebene Weise programmiert. Beispiele für Funktionsinstanzen sind Nutzergeräte (bspw. Endgeräte oder Rechner (Computer) von Nutzern), lokale Funktionsinstanzen der Gerätschaft (bspw. ein Mikroprozessor oder eine Steuereinheit der Gerätschaft) und dezentrale Cloud-basierte beziehungsweise dezentrale serverbasierte Funktionsinstanzen (bspw. ein vom Ort der Gerätschaft entfernter Server).

Aus Sicht einer zweiten Funktionseinheit 2 der mehreren Funktionseinheiten 1, 2, 3 handelt es sich bei einigen der Schnittstellen 9 um Empfangsschnittstellen 4 und bei anderen der Schnittstellen 9 um Sendeschnittstellen 5. Die zweite Funktionseinheit 2 ist dazu ausgebildet, über die Empfangsschnittstellen 4 Steuersignale aus ersten Funktionseinheiten 1 zu empfangen. Die zweite Funktionseinheit 2 ist dazu ausgebildet, Steuersignale über die Sendeschnittstellen 5 an die dritten Funktionseinheiten 3 zu übermitteln. Selbstverständlich kann eine der Funktionseinheiten 1, 3 sowohl eine Sendeschnittstelle 5 (aus Sicht der zweiten Funktionseinheit 2) als auch eine Empfangsschnittstellen 4 (aus Sicht der zweiten Funktionseinheit 2) mit der zweiten Funktionseinheit 2 aufweisen. Eine solche Funktionseinheit kann sowohl als erste Funktionseinheit 1 als auch als dritte Funktionseinheit 3 aufgefasst werden.

Die Funktionseinheiten 1, 2, 3 sind gemeinsam mit der Gerätschaft 6 vernetzt. Dabei kann/können nur eine einzelne der Funktionseinheiten 1, 2, 3, mehrere der Funktionseinheiten 1, 2, 3 oder alle der Funktionseinheiten 1, 2, 3 über eine jeweilige Verbindung, insbesondere Datenverbindung, mit der Gerätschaft 6 verbunden sein. Um die Vernetzung 7 der Funktionseinheiten 1, 2, 3 mit der Gerätschaft 6 kenntlich zu machen, sind die Funktionseinheiten 1, 2, 3 in der FIG 1 umkreist und die Vernetzung 7 ist durch eine Verbindunglinie kenntlich gemacht.

Bei der Gerätschaft 6 handelt es sich beispielsweise um einen einzelnen Sensor und/oder Aktor beziehungsweise Motor einer Produktionsmaschine, eine Produktionsmaschine, mehrere Produktionsmaschinen oder eine ganze Anlage, insbesondere Produktionsanlage.

Die Funktionseinheiten 1, 2, 3 stellen die Steuerfunktion für die Gerätschaft 6 bereit. Die Steuerfunktion kann beispielsweise eine oder mehrere der folgenden Aufgaben umfassen: Steuerung, Überwachung, Wartung, Sammeln von Daten (aus der Gerätschaft 6 und/oder externer Daten) und/oder Bereitstellen einer Nutzerschnittstelle um eine Bedienung der Gerätschaft 6 durch einen Nutzer zu ermöglichen. Dabei können unterschiedliche Aufgaben oder sogar gleiche Aufgaben auf unterschiedliche der Funktionseinheiten 1, 2, 3 aufgeteilt sein. Die Steuerfunktion wird somit modular durch die Funktionseinheiten 1, 2, 3 geleistet beziehungsweise bereitgestellt. Die Steuerfunktion kann an einen Nutzungsfall angepasst werden, indem den Funktionseinheiten 1, 2, 3 neue Funktionseinheiten hinzugefügt werden und/oder einzelne Funktionseinheiten aus den mehreren Funktionseinheiten 1, 2, 3 entfernt werden. Durch diesen modularen Aufbau ergibt sich eine große Anzahl unterschiedlicher Kombinationsmöglichkeiten für derartige Funktionseinheiten 1, 2, 3. Es ist daher von großem Interesse, wie zuverlässig die Steuerfunktion durch die Funktionseinheiten 1, 2, 3 erbracht werden kann.

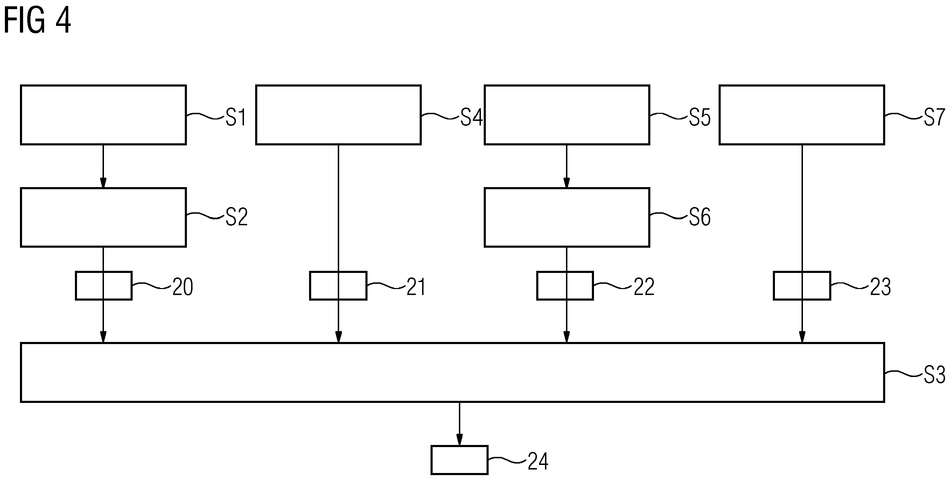

Aus diesem Grund ist vorgesehen, dass die Zuverlässigkeit 24, mit welcher die Funktionseinheiten 1, 2 ,3 die Steuerfunktion erbringen können, bestimmt wird. Dies erfolgt vorliegend in einem Schritt S3 eines beispielhaften Verfahrens gemäß FIG 4. Dieses Bestimmen der Zuverlässigkeit 24 kann als auch Risikobewertung bezeichnet werden. Dabei kann ein Risiko angegeben werden, welches für den Ausfall der Steuerfunktion besteht. Dies erfolgt vorliegend nach folgender Formel 1:

```
Risiko = Gefährdungsgröße 20 X Verwundbarkeitsmaß 21 X Abhän-
gigkeitsmaß 22
```

Das Risiko kann hierbei als indirekt proportional zur Zuverlässigkeit 24 aufgefasst werden. Im vorliegenden Beispiel wird das Risiko gemäß einer vorbestimmten Vorschrift, welche durch die Formel 1 bereitgestellt ist, aus einer Gefährdungsgröße 20, einem Verwundbarkeitsmaß 21 und einem Abhängigkeitsmaß 22 berechnet. Bei X handelt es sich um einen mathematischen Operator zum Verknüpfen der drei Ausgangsgrößen (Gefährdungsgröße 20, Verwundbarkeitsmaß 21, Abhängigkeitsmaß 22). Der mathematische Operator X kann beispielsweise vorgeben, dass die Ausgangsgrößen miteinander addiert, multipliziert, subtrahiert oder durcheinander geteilt werden. Diese Angaben sind jedoch rein beispielhaft zu verstehen, der mathematische Operator X kann durch jede beliebige und denkbare Rechenvorschrift gebildet sein.

Zum Bestimmen der Gefährdungsgröße 20 wird zunächst in einem Schritt S1 bestimmt, mit welchen ersten 1 der mehreren Funktionseinheiten 1, 2, 3 die zweite Funktionseinheit 2 jeweils zumindest eine Empfangsschnittstelle 4 zum Empfangen jeweiliger Steuersignale aus der jeweiligen ersten Funktionseinheiten 1 aufweist. Mit anderen Worten wird bestimmt, mit welchen der mehreren Funktionseinheiten 1, 2, 3 die zweite Funktionseinheit 2 über eine Empfangsschnittstelle 4 verbunden ist und jene als erste Funktionseinheiten 1 bestimmt. Die jeweilige Empfangsschnittstelle 4 ist eine Empfangsschnittstelle aus Sicht der zweiten Funktionseinheit 2.

Die Gefährdungsgröße 20 wird in einem Schritt S2 bestimmt. Die Gefährdungsgröße 20 gibt eine Gefährdung der Funktion der zweiten Funktionseinheit 2 durch den Ausfall einer oder mehrere der Empfangsschnittstellen 4 an. Ein solcher Ausfall einer der Empfangsschnittstellen 4 kann beispielsweise resultieren aus einem Ausfall der jeweiligen ersten Funktionseinheit 1, aus einer Unterbrechung einer Signalverbindung, durch welche die jeweilige Empfangsschnittstelle 4 bereitgestellt ist, durch fehlerhafte oder verzögerte Funktion einer jeweiligen der ersten Funktionseinheiten 1 oder durch funktionale Änderungen an einer der ersten Funktionseinheiten 1, welche zu Inkompatibilitäten an der jeweiligen Empfangsschnittstelle 4 führen. Beispielsweise wird jeder der Empfangsschnittstellen 4 eine jeweilige Ausfallwahrscheinlichkeit zugeordnet, welche das Ausfallrisiko der jeweiligen Empfangsschnittstelle 4 angibt. Somit kann das Ausfallrisiko eine Wahrscheinlichkeit für den Ausfall der Signalverbindung der jeweiligen Empfangsschnittstelle 4, für den Ausfall der jeweiligen ersten Funktionseinheit 1, für eine Funktionsstörung der jeweiligen Funktionseinheit 1 und/oder für eine Änderung der jeweiligen Funktionseinheit 1, welche zu Inkompatibilitäten führt, angeben. Dabei kann diese Ausfallwahrscheinlichkeit auf bisherige Erfahrungen und/oder zukünftige Erwartungen gestützt werden. Beispielsweise kann die Ausfallwahrscheinlichkeit durch einen jeweiligen Prozentsatz angegeben werden, der angibt, wie viel Prozent der Zeit in einem vorbestimmten Betrachtungszeitraum die jeweilige Empfangsschnittstelle 4 ausgefallen ist. Die Gefährdungsgröße 20 kann beispielsweise durch Summation oder Multiplikation der jeweiligen Ausfallwahrscheinlichkeiten der einzelnen Empfangsschnittstellen 4 gebildet werden. Auf diese Weise können durch die Gefährdungsgröße 20 beispielsweise regelmäßige Änderungen an den Empfangsschnittstellen 4, Kommunikationsprobleme beziehungsweise Kommunikationsverzögerungen und/oder regelmäßige Unerreichbarkeiten zum Bestimmen der Zuverlässigkeit 24 der Steuerfunktion berücksichtigt werden.

Das Verwundbarkeitsmaß 21 wird in einem Schritt S4 bestimmt. Das Verwundbarkeitsmaß 21 gibt an, wie verwundbar die zweite Funktionseinheit 2 gegenüber einem Ausfall einer oder mehrerer der Empfangsschnittstellen 4 ist. Mit andere Worten kann das Verwundbarkeitsmaß 21 angeben, wie schwerwiegend die Folgen aus dem Ausfall einer der Empfangsschnittstellen 4 für die Funktion der zweiten Funktionseinheit 2 sind. Durch das Verwundbarkeitsmaß 21 kann dabei berücksichtigt werden, wie schnell und/oder zuverlässig die zweite Funktionseinheit 2 an einen solchen Ausfall angepasst werden kann. Aus diesem Grund kann vorgesehen sein, dass das Verwundbarkeitsmaß 21 umso geringer ist, je besser die zweite Funktionseinheit 2 durch Wartungspersonal gewartet wird. Somit kann das Verwundbarkeitsmaß 21 beispielsweise indirekt proportional zu einer Anzahl Personen, die für die Wartung zuständig sind, sein. Alternativ oder zusätzlich kann das Verwundbarkeitsmaß 21 direkt proportional zu einer durchschnittlichen Länge des Wartungsintervalls, also der Zeitdauer zwischen zwei Wartungen der zweiten Funktionseinheit 2, sein. Zuletzt kann durch das Verwundbarkeitsmaß 21 berücksichtigt werden, wie gut die Funktion der zweiten Funktionseinheit 2 auch bei Ausfall einer oder mehrerer der Empfangsschnittstelle 4 gewährleistet werden kann.

Das Abhängigkeitsmaß 22 gibt an, wie groß die Auswirkungen eines Ausfalls der zweiten Funktionseinheit 2 für andere der Funktionseinheiten 1, 2, 3 ist. Das Abhängigkeitsmaß 22 wird in einem Schritt S6 bestimmt. Hierzu werden zunächst dritte Funktionseinheiten 3 bestimmt S5, zu welchen die zweite Funktionseinheit 2 eine der Sendeschnittstellen 5 aufweist. Für derartige dritte Funktionseinheiten 3 kann der Ausfall der zweiten Funktionseinheit 2 besonders schwerwiegend sein, da diese für ihre ordnungsgemäße Funktion auf Steuersignale aus der zweiten Funktionseinheit 2 angewiesen sein können. Diese Steuersignale werden in einem Normalbetrieb der zweiten Funktionseinheit 2 durch diese über die jeweilige Sendeschnittstelle 5 an eine jeweilige der dritten Funktionseinheiten 3 übermittelt. Hierbei kann das Abhängigkeitsmaß 22 direkt proportional zu der Anzahl an dritten Funktionseinheiten 3 sein. Alternativ oder zusätzlich kann das Abhängigkeitsmaß 22 direkt proportional zu der Anzahl an Sendeschnittstellen 5 der zweiten Funktionseinheit 2 sein. Weiterhin kann in dem Abhängigkeitsmaß 22 berücksichtigt werden, von wie großer Bedeutung jeweilige Steuersignale, welche die zweite Funktionseinheit 2 über die Sendeschnittstelle 5 an die dritten Funktionseinheiten 3 übermittelt, für die jeweiligen dritten Funktionseinheiten 3 sind. Umso größer diese Bedeutung ist, desto höher kann das Abhängigkeitsmaß 22 sein. Zusammengefasst kann das Abhängigkeitsmaß 22 angeben, wie abhängig die Funktionseinheiten 1, 3 von der zweiten Funktionseinheit 2 für ihre ordnungsgemäße Funktion sind.

Um festzustellen, wie leicht die zweite Funktionseinheit 2 im Falle eines Ausfalls zu ersetzen wäre, wird im vorliegenden Ausführungsbeispiel zusätzlich eine Ähnlichkeitsprüfung durchgeführt S7. Im Rahmen der Ähnlichkeitsprüfung kann überprüft werden, ob eine Funktionseinheit gefunden werden kann, deren funktionelle Ähnlichkeit mit der zweiten Funktionseinheit 2 einen vorbestimmten Schwellenwert überschreitet. Beispielsweise werden die Funktionseinheiten 1, 2, 3 beziehungsweise 10, 12 durch einen digitalen Softwaremarktplatz, auch als App-Store bezeichnet, bereitgestellt. In diesem Fall kann die Ähnlichkeitsprüfung zwischen der zweiten Funktionseinheit 2 und allen Funktionseinheiten, die durch den Softwaremarktplatz breitgestellt werden, durchgeführt werden. Umso ähnlicher weitere Funktionseinheiten des Softwaremarktplatzes der zweiten Funktionseinheit 2 sind, desto leichter kann die zweite Funktionseinheit 2 durch eine der ähnlichen Funktionseinheiten ersetzt werden. Als ähnliche Funktionseinheit wird hierbei eine Funktionseinheit bezeichnet, deren Ähnlichkeit mit der zweiten Funktionseinheit 2 das vorbestimmte Maß überschreitet. Zum Durchführen der Ähnlichkeitsprüfung können einzelne Merkmale, interne Vorgänge der jeweiligen Funktionseinheiten, Eingangsschnittstellen und/oder Ausgangsschnittstellen der jeweiligen Funktionseinheiten miteinander verglichen werden. Weist beispielsweise eine Funktionseinheit A 20 Merkmale auf und eine Funktionseinheit B zehn Merkmale auf, wobei die zehn Merkmale der Funktionseinheit B mit zehn der 20 Merkmale von Funktionseinheit A überlappen, dann weist die Funktionseinheit B verglichen mit der Funktionseinheit A eine Ähnlichkeit von 1 auf. Umgekehrt weist die Funktionseinheit A mit der Funktionseinheit B eine Ähnlichkeit von 0,5 auf. Die Ähnlichkeitsprüfung kann beispielsweise durch folgende Formel 2 beschrieben werden:

$$\mathrm{SIM}\ (A,B) = |F_A \cap F_B|\ /\ \min\ (|F_A|, |F_B|)$$

Dabei bezeichnet SIM ein Ähnlichkeitsmaß und A, B bezieht sich auf die Funktionseinheiten A und B. Merkmale der Funktionseinheiten A und B werden in der Formel 2 als $F_A$ beziehungsweise $F_B$ bezeichnet. Dabei kann sich das Ähnlichkeitsmaß zwischen 0 und 1 befinden, wobei ein Ähnlichkeitsmaß von 0 bedeutet, dass keinerlei Ähnlichkeit gegeben ist und ein Ähnlichkeitsmaß von 1 bedeutet, dass Merkmalsgleichheit gegeben ist. umso höher das Ähnlichkeitsmaß zwischen zwei Funktionseinheiten A, B ist, desto leichter können diese durch die jeweils andere Funktionseinheit ersetzt werden. Für das Bestimmen der Zuverlässigkeit 24 der Steuerfunktion bedeutet dies, dass diese umso größer ist, je größer die Ähnlichkeit der Funktionseinheit 2 mit einer weiteren Funktionseinheit aus dem Softwaremarktplatz ist.

Die Ähnlichkeitsprüfung kann um Ressourcen zu schonen nur innerhalb einer semantischen Gruppe 11, 13 der zweiten Funktionseinheit 2 durchgeführt werden. Hierzu werden die Funktionseinheiten des Softwaremarktplatzes in unterschiedliche semantische Gruppen 11, 13 eingeteilt. Diese Einteilung kann beispielsweise basierend auf der Funktionsweise, einer Beschreibung, zugeordneten Stichworten und/oder Dokumentation der jeweiligen Schnittstellen der Funktionseinheiten des Softwaremarktplatzes erfolgen. Durch die Einteilung in semantische Gruppen 11, 13 können auf einfache Weise Funktionseinheiten in einer semantischen Gruppe 11, 13 zusammengefasst werden, für welche die Wahrscheinlichkeit auf eine hohe Ähnlichkeit besonders hoch ist. Somit wird die Ähnlichkeitsprüfung nur zwischen Funktionseinheiten derselben semantischen Gruppe 11, 13 durchgeführt. In einem konkreten Beispiel bedeutet dass, dass die Ähnlichkeitsprüfung von der zweiten Funktionseinheit 2 aus betrachtet nur mit Funktionseinheiten durchgeführt wird, welche Teil derselben semantischen Gruppe 11, 13 sind, wie die zweite Funktionseinheit 2.

Zusätzlich wird zum Bestimmen der Zuverlässigkeit 24 der Steuerfunktion ermittelt, ob die zweite Funktionseinheit 2 eine so genannte Brückenfunktion innehat. Als Brückenfunktion beziehungsweise Brücke wird die zweite Funktionseinheit 2 bezeichnet, wenn durch sie die Funktionseinheiten unterschiedlicher semantischer Gruppen 11, 13 verknüpft sind. Dies ist schematisch in FIG 2 dargestellt. Funktionseinheiten 10 einer ersten semantischen Gruppe 11 und Funktionseinheiten 12 einer zweiten semantischen Gruppe 13 sind über Schnittstellen 14, 15 miteinander verknüpft. Die zweite Funktionseinheit 2 kann entweder Teil der ersten semantischen Gruppe 11, Teil der zweiten semantischen Gruppe 13 oder Teil keiner der semantischen Gruppen 11, 13 sein. Dabei verlaufen direkte Schnittstellen 15 direkt zwischen unterschiedlichen Funktionseinheiten 10, 12 unterschiedlicher der semantischen Gruppen 11, 13. Indirekte Schnittstellen 14 verlaufen zwischen den Funktionseinheiten 10, 12 der jeweiligen semantischen Gruppen 11, 13 und der zweiten Funktionseinheit 2. Bezüglich der indirekten Schnittstellen 14 kann die zweite Funktionseinheit 2 somit als Brücke zwischen den semantischen Gruppen 11, 13 aufgefasst werden. Dies ist dabei unabhängig davon, ob die zweite Funktionseinheit 2 Teil einer der semantischen Gruppen 11, 13 ist.

Es kann nun eine erste Anzahl an Schnittstellen ermittelt werden, welche die Anzahl aller Schnittstellen 14, 15 zwischen den Funktionseinheiten 10, 12 beider semantischer Gruppen 11, 13 angibt. Die erste Anzahl an Schnittstellen 14, 15 enthält somit sowohl die indirekten Schnittstellen 14 als auch die direkten Schnittstellen 15. Zusätzlich kann eine zweite Anzahl an Schnittstellen 14 bestimmt werden, welche die Anzahl an Schnittstellen 14 zwischen Funktionseinheiten 10, 12 der unterschiedlichen semantischen Gruppen 11, 13 und der zweiten Funktionseinheit 2 angibt. Die zweite Anzahl an Schnittstellen 14 umfasst somit nur die indirekten Schnittstellen 14. Umso größer die zweite Anzahl an Schnittstellen 14 im Vergleich zu der ersten Anzahl an Schnittstellen 14, 15 ist, desto größer ist die Bedeutung der zweiten Funktionseinheit 2 als Brücke zwischen den semantischen Gruppen 11, 13. Dies bedeutet wiederum, dass ein Ausfall der zweiten Funktionseinheit 2 besonders weitreichende Folgen für das Bereitstellen der Steuerfunktion haben kann. Es ist somit vorgesehen, dass das Maß für die Zuverlässigkeit 24 als umso geringer bestimmt wird, je größer die zweite Anzahl an Schnittstellen 14 im Vergleich zu der ersten Anzahl an Schnittstellen 14, 15 ist. Beispielsweise wird dieses Verhältnis zwischen erster und zweiter Anzahl an Schnittstellen 14, 15 in dem Abhängigkeitsmaß 22 berücksichtigt. Alternativ kann dieses Verhältnis auf andere Weise bei dem Bestimmen der Zuverlässigkeit 24 Eingang finden.

Die Schritte aus Sicht der zweiten Funktionseinheit 2 werden vorteilhafter Weise für jede der Funktionseinheiten des Softwaremarktplatzes durchgeführt. Mit anderen Worten werden für jede der Funktionseinheiten des Softwaremarktplatzes jeweilige Empfangsschnittstellen und Sendeschnittstellen bestimmt. Vorteilhafter Weise wird für jeder Funktionseinheiten des Softwaremarktplatzes eine jeweilige Gefährdungsgröße 20, ein jeweiliges Verwundbarkeitsmaß 21 und ein jeweiliges Abhängigkeitsmaß 22 bestimmt, wobei die jeweilige Funktionseinheit hierzu jeweils den Platz der zweiten Funktionseinheit in den genannten Verfahrensschritten einnimmt. Aus den jeweiligen Werten für das Risiko beziehungsweise dem jeweiligen Maß für die Zuverlässigkeit 24, das hierbei ermittelt wird, kann eine Gesamtzuverlässigkeit beziehungsweise ein Gesamtrisiko bestimmt werden. Beispielsweise wird das Gesamtrisiko beziehungsweise die Gesamtzuverlässigkeit durch mathematische Verknüpfung der jeweiligen Risiken beziehungsweise der jeweiligen Werte für die Zuverlässigkeit 24 der Funktionseinheiten gebildet. Die mathematische Verknüpfung kann dabei beispielsweise durch Plusrechnung, Malrechnung, Subtraktion oder jede beliebige mathematische Verknüpfung gebildet sein. Beispielsweise wird das jeweilige Maß für die Zuverlässigkeit 24, welches für die jeweiligen Funktionseinheiten des Softwaremarktplatzes bestimmt wird, zu der Gesamtzuverlässigkeit aufsummiert beziehungsweise aufaddiert. Beispielsweise wird ein jeweiliges Risiko, welches für die jeweiligen Funktionseinheiten des Softwaremarktplatzes bestimmt wird, zu einem Gesamtrisiko aufaddiert beziehungsweise miteinander multipliziert.

Zuletzt zeigt die FIG 3 in einem Blockdiagramm eine mögliche Verarbeitungsstruktur zum Bestimmen der Zuverlässigkeit 24 der Steuerfunktion. Diese Verarbeitungsstruktur kann beispielsweise durch den Softwaremarktplatz bereitgestellt werden. Durch jeweiligen Überwachungseinheiten 31, 32 werden der Marktplatz sowie die Schnittstellen 9 zwischen den unterschiedlichen Funktionseinheiten des Softwaremarktplatzes (beispielsweise zwischen den Funktionseinheiten 1, 2, 3) überwacht. Dabei ist die Überwachungseinheit 31 für die Überwachung der Schnittstellen 9 und die Überwachungseinheit 32 für die Überwachung des Softwaremarktplatzes zuständig. Durch diese Überwachungseinheiten werden Daten zum Auswerten der Funktionseinheiten des Softwaremarktplatzes sowie deren Schnittstellen 9 gesammelt und aufbereitet. Diese Daten beinhalten statische Informationen über die Funktionseinheiten des Softwaremarktplatzes beziehungsweise zugrundeliegenden Softwarepaketen, sowie Informationen aus Wertungen zu deren Schnittstellen 9. Alternativ oder zusätzlich können diese Daten dynamische Informationen beispielsweise zur Auslastung, Nutzung, Nutzungsstatistiken, Ausfällen und aufgetretenen Fehlern der Funktionseinheiten des Softwaremarktplatzes beziehungsweise der Schnittstellen 9 beinhalten. Änderungen an den Schnittstellen 9 beziehungsweise Änderungen welche die Schnittstellen 9 betreffen werden durch eine weitere Überwachungseinheit 30 gesammelt.

Die Daten der Überwachungseinheiten 30, 31, 32 werden in einer Datenbank 33 gespeichert. Insbesondere erfolgt dieses Speichern zeitabhängig, sodass historische Verläufe der gesammelten Daten ausgewertet werden können. Das eigentliche Verfahren zum Bestimmen der Zuverlässigkeit 24 der Steuerfunktion wird durch einen Rechenblock 34 durchgeführt. Der Rechenblock 34 kann hierzu auf die Datenbank 33 zugreifen und insbesondere die gespeicherten Daten aus den Überwachungseinheiten aus der Datenbank 33 laden. Ergebnisse dieses Bestimmens der Zuverlässigkeit 24 werden über eine Nutzerschnittstelle 35 aufbereitet und ausgegeben. Beispielsweise können über die Nutzerschnittstelle 35 Funktionseinheiten des Softwaremarktplatzes und/oder Schnittstellen ausgegeben beziehungsweise angezeigt werden, welche ein Risiko für die Zuverlässigkeit 24 des Softwaremarktplatzes darstellen. Ein hohes Risiko kann dabei durch einen vorbestimmten Risikowert definiert sein. Beispielsweise gilt das Risiko als hoch, wenn es größer ist als der vorbestimmte Risikowert. Insbesondere können hierzu die einzelnen Werte für die Zuverlässigkeit 24 der einzelnen Funktionseinheiten des Softwaremarktplatzes und die Gesamtzuverlässigkeit ausgewertet werden. Außerdem kann durch die Nutzerschnittstelle 35 angegeben werden, auf welche Weise die Zuverlässigkeit insgesamt verbessert werden kann. Dafür kann beispielsweise auf die Ähnlichkeitsprüfung zurückgegriffen werden, und auf Funktionseinheiten verwiesen werden, welche besonders gefährdeten Funktionseinheiten des Softwaremarktplatzes ähnlich sind.

Die Überwachungseinheiten 30, 31, 32, die Datenbank 33 gespeichert und der Rechenblock 34 sind vorliegend Mittel der Steuereinrichtung 19 zum Durchführen des beschriebenen Verfahrens.

## Patentansprüche

1. Verfahren zum Bestimmen der Zuverlässigkeit (24) einer Steuerfunktion für eine Gerätschaft (6), wobei mehrere Funktionseinheiten (1, 2, 3) die Steuerfunktion zum Steuern und/oder Überwachen der Gerätschaft (6) gemeinsam bereitstellen und die mehreren Funktionseinheiten (1, 2, 3) hierzu untereinander Steuersignale austauschen , mit den Schritten:

   - Bestimmen (S2) einer Gefährdungsgröße (20) für eine zweite (2) der mehreren Funktionseinheiten (1, 2, 3), wobei die Gefährdungsgröße (20) eine Gefährdung der zweiten Funktionseinheit (2) durch eine Störung einer Empfangsschnittstelle (4) der zweiten Funktionseinheit (2) zwischen der zweiten Funktionseinheit (2) und einer ersten (1) der mehreren Funktionseinheiten (1, 2, 3) beschreibt, und
   - Bestimmen (S3) der Zuverlässigkeit (24) der Steuerfunktion in Abhängigkeit von der Gefährdungsgröße (20).

2. Verfahren nach Anspruch 1, **dadurch gekennzeichnet, dass** in einem weiteren Schritt bestimmt (S1) wird, mit welchen ersten (1) der mehreren Funktionseinheiten (1, 2, 3) die zweite Funktionseinheit (2) jeweils zumindest eine Empfangsschnittstelle (4) zum Empfangen jeweiliger Steuersignale aus der jeweiligen ersten Funktionseinheiten (1) aufweist.

3. Verfahren nach Anspruch 1 oder 2, **dadurch gekennzeichnet, dass** die Gefährdungsgröße (20) auf Basis jeweiliger Ausfallwahrscheinlichkeiten der jeweils zumindest einen Empfangsschnittstellen (4) der zweiten Funktionseinheit (2) mit jeder der ersten Funktionseinheiten (1) bestimmt wird.

4. Verfahren nach einem der vorhergehenden Ansprüche, **dadurch gekennzeichnet, dass**

   - ein Verwundbarkeitsmaß (21) bestimmt wird (S4), wobei das Verwundbarkeitsmaß (21) angibt, wie widerstandsfähig die zweite Funktionseinheit (2) gegenüber einem Ausfall einer der Empfangsschnittstellen (4) der zweiten Funktionseinheit (2) mit einer der ersten Funktionseinheiten (1) ist, und
   - das Bestimmen (S3) der Zuverlässigkeit (24) zusätzlich in Abhängigkeit von dem Verwundbarkeitsmaß (21) erfolgt.

5. Verfahren nach einem der vorhergehenden Ansprüche, **dadurch gekennzeichnet, dass**

   - bestimmt (S5) wird, zu wie vielen dritten (3) der mehreren Funktionseinheiten (1, 2, 3) die zweite Funktionseinheit (2) eine Sendeschnittstelle (5) zum Übermitteln von Steuersignalen an die dritten Funktionseinheiten (3) aufweist,
   - ein Abhängigkeitsmaß (22) bestimmt (S6) wird, wobei das Abhängigkeitsmaß (22) zumindest davon abhängt, wie viele dritte Funktionseinheiten (3) vorhanden sind, und
   - das Bestimmen (S3) der Zuverlässigkeit (24) zusätzlich in Abhängigkeit von dem Abhängigkeitsmaß (22) erfolgt.

6. Verfahren nach Anspruch 5, **dadurch gekennzeichnet, dass** das Abhängigkeitsmaß (22) umso größer ist, je mehr dritte Funktionseinheiten (3) erkannt werden.

7. Verfahren nach einem der vorhergehenden Ansprüche, **dadurch gekennzeichnet, dass**

   - eine Ähnlichkeitsprüfung durchgeführt (S7) wird, im Rahmen welcher ein Maß für die funktionelle Ähnlichkeit der zweiten Funktionseinheit (2) mit weiteren Funktionseinheiten bestimmt wird, und
   - das Bestimmen (S3) der Zuverlässigkeit (24) zusätzlich in Abhängigkeit von einem Ergebnis der Ähnlichkeitsprüfung erfolgt.

8. Verfahren nach Anspruch 7, **dadurch gekennzeichnet, dass** bei dem Bestimmen der Zuverlässigkeit (24) das Maß für die Zuverlässigkeit (24) als umso größer bestimmt wird, je größer eine festgestellte Ähnlichkeit der zweiten Funktionseinheit mit einer der weiteren Funktionseinheiten ist.

9. Verfahren nach einem der vorhergehenden Ansprüche, **dadurch gekennzeichnet, dass**

   - eine erste Anzahl an Schnittstellen (14, 15), welche zwischen den Funktionseinheiten (10, 12) unterschiedlicher semantischer Gruppen (11, 13) vorhanden sind, bestimmt wird,
   - eine zweite Anzahl an Schnittstellen (14), welche zwischen den Funktionseinheiten (10, 12) der semantischen Gruppen (11, 13) und der zweiten Funktionseinheit (2) vorhanden sind, bestimmt wird, und
   - bei dem Bestimmen der Zuverlässigkeit (24) das Maß für die Zuverlässigkeit (24) abhängig davon bestimmt wird, wie groß die zweite Anzahl an Schnittstellen (14) im Vergleich zu der ersten Anzahl an Schnittstellen (14, 15) ist.

10. Verfahren nach einem der vorhergehenden Ansprüche, **dadurch gekennzeichnet, dass** die genannten Schritte aus Sicht der zweiten Funktionseinheit (2) für jede der mehreren Funktionseinheiten (1, 2, 3) durchgeführt werden.

11. Verfahren nach Anspruch 10, **dadurch gekennzeichnet, dass** aus der Zuverlässigkeit (24), die für jede der mehreren Funktionseinheiten (1, 2, 3) bestimmt wird, eine Gesamtzuverlässigkeit der Steuerfunktion gebildet wird.

12. Steuereinrichtung (19) zum Bestimmen der Zuverlässigkeit (24) einer Steuerfunktion für eine Gerätschaft (6), wobei die Steuereinrichtung (19) eingerichtet ist, ein Verfahren nach einem der Ansprüche 1 bis 11 durchzuführen.

13. Computerprogramm, welches direkt in einen Speicher einer Steuereinrichtung (19) ladbar ist, mit Programmcodemitteln, um die Schritte des Verfahrens nach einem der Ansprüche 1 bis 11 auszuführen, wenn das Programm in der Steuereinrichtung (19) ausgeführt wird.

14. Speichermedium mit darauf gespeicherten elektronisch lesbaren Steuerinformationen, welche zumindest ein Computerprogramm nach Anspruch 13 umfassen und derart ausgestaltet sind, dass sie bei Verwendung des Speichermediums in einer Steuereinrichtung (19) ein Verfahren nach einem der Ansprüche 1 bis 11 durchführen.

15. Datenstrom an Daten umfassend ein Maß für eine Zuverlässigkeit (24) einer Steuerfunktion, wobei der Datenstrom zumindest teilweise mittels eines Verfahrens nach einem der Ansprüche 1 bis 11 gewonnen wurde.

FIG 1

FIG 2

FIG 3

## FIG 4

EP 3 588 849 A1

**Europäisches Patentamt**

**European Patent Office**

**Office européen des brevets**

# EUROPÄISCHER RECHERCHENBERICHT

Nummer der Anmeldung

EP 18 17 9011

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | EP 2 302 477 A1 (ABB RESEARCH LTD [CH])<br>30. März 2011 (2011-03-30)<br>* Absatz [0008] - Absatz [0009] *<br>* Absatz [0012] *<br>* Absatz [0014] - Absatz [0019]; Abbildung 2 *<br>* Absatz [0022] - Absatz [0023]; Abbildung 4 und 5 * | 1-3,5,6<br><br>7-15 | INV.<br>H04L12/24<br>G05B23/02<br>G06F21/57<br>H04L29/06 |
| X<br>A | ----<br>US 2016/070915 A1 (KNAPP ERIC D [US])<br>10. März 2016 (2016-03-10)<br>* Absatz [0005] *<br>* Absatz [0009] *<br>* Absatz [0024] - Absatz [0025]; Abbildung 1 *<br>* Absatz [0030]; Abbildung 1 *<br>* Absatz [0036] - Absatz [0041]; Abbildungen 1-3 *<br>* Absatz [0047] - Absatz [0048]; Abbildung 4C und 4D *<br>---- | 1-6<br><br>7-15 | |

RECHERCHIERTE SACHGEBIETE (IPC)

H04L
G05B
G06F

Der vorliegende Recherchenbericht wurde für alle Patentansprüche erstellt

| Recherchenort | Abschlußdatum der Recherche | Prüfer |
|---|---|---|
| München | 12. Dezember 2018 | Bernard, Eddy |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
　　Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 17 9011

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-12-2018

| Im Recherchenbericht angeführtes Patentdokument | Datum der Veröffentlichung | Mitglied(er) der Patentfamilie | Datum der Veröffentlichung |
|---|---|---|---|
| EP 2302477 A1 | 30-03-2011 | CN 102549513 A | 04-07-2012 |
| | | EP 2302477 A1 | 30-03-2011 |
| | | EP 2480941 A1 | 01-08-2012 |
| | | ES 2423607 T3 | 23-09-2013 |
| | | US 2012239320 A1 | 20-09-2012 |
| | | WO 2011036067 A1 | 31-03-2011 |
| US 2016070915 A1 | 10-03-2016 | CN 106716953 A | 24-05-2017 |
| | | EP 3192232 A2 | 19-07-2017 |
| | | JP 2017527044 A | 14-09-2017 |
| | | US 2016070915 A1 | 10-03-2016 |
| | | WO 2016081044 A2 | 26-05-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 201803976 A

- EP 201724079 A